# EUROPEAN PATENT APPLICATION

(11) **EP 4 804 575 A1**
(43) Date of publication of application: **09.09.2026**
(21) Application number: 26161697.3
(22) Date of filing: 02.03.2026
(51) Int. Cl.: H04W 4/50

(54) **DATA TRANSMISSION METHOD, APPARATUS, AND COMPUTER DEVICE**

(30) Priority: 03.03.2025 CN 202510248085
(71) Applicant: GUANGDONG OPPO MOBILE TELECOMMUNICATIONS CORP., LTD., Dongguan, Guangdong 523860 (CN)
(72) Inventor: CHEN, Zhiying, Dongguan, Guangdong, 523860 (CN); XIA, Yang, Dongguan, Guangdong, 523860 (CN); WEI, Yilong, Dongguan, Guangdong, 523860 (CN)
(74) Representative: Novagraaf Technologies

(57) **Abstract**

A data transmission method, an apparatus, and a computer device. The data transmission method is applied to a terminal device and includes: identifying (S101) a usage scenario of an application; in a case where the usage scenario is a first scenario, popping up (S102) prompt information to a user via a display interface, where the prompt information is configured to prompt the user with subscribable value-added services; in response to a confirmation operation input by the user for the prompt information, sending (S103) a subscription instruction to a first network element of a core network, where the subscription instruction is configured to subscribe to a value-added service among the subscribable value-added services; receiving (S104) network slice resources associated with the value-added service allocated by the first network element of the core network; and transmitting (S105) data of the application on the network slice resources.

## Description

### TECHNICAL FIELD

The present disclosure relates to the field of communication technologies, and in particular, to a data transmission method, an apparatus, and a computer device.

### BACKGROUND

With the development of mobile internet technologies, the number of users accessing the internet via mobile terminals is gradually increasing. When users use cellular services to access the internet, corresponding network resources are allocated to them based on pre-subscribed network services. This makes it difficult for users to precisely control network resources according to their actual needs, thereby reducing network efficiency.

### SUMMARY OF THE DISCLOSURE

The present disclosure mainly provides a data transmission method, an apparatus, and a computer device, which may recommend value-added services to users in a timely and precise manner, enabling users to accurately control network resources according to actual needs, thereby achieving optimal network efficiency.

The technical solution of the present disclosure is implemented as follows.

In a first aspect, some embodiments of the present disclosure provide a data transmission method applied to a terminal device. The method includes:
identifying a usage scenario of an application;
in a case where the usage scenario is a first scenario, popping up prompt information to a user via a display interface; wherein the prompt information is configured to prompt the user with subscribable value-added services;
in response to a confirmation operation input by the user for the prompt information, sending a subscription instruction to a first network element of a core network; wherein the subscription instruction is configured to subscribe to a value-added service among the subscribable value-added services;
receiving network slice resources associated with the value-added service allocated by the first network element of the core network; and
transmitting data of the application on the network slice resources.

In a second aspect, some embodiments of the present disclosure provide a data transmission apparatus. The apparatus includes:
an AI module, configured to identify a usage scenario of an application;
a display unit, configured to, in a case where the usage scenario is a first scenario, pop up prompt information to a user via a display interface; wherein the prompt information is configured to prompt the user with subscribable value-added services; and
a first communication unit, configured to, in response to a confirmation operation input by the user for the prompt information, send a subscription instruction to a first network element of a core network; wherein the subscription instruction is configured to subscribe to a value-added service among the subscribable value-added services;
wherein the first communication unit is further configured to receive network slice resources associated with the value-added service allocated by the first network element of the core network;
the first communication unit is further configured to transmit data of the application on the network slice resources.

In a third aspect, some embodiments of the present disclosure provide a computer device, including:
a memory, configured to store a computer program;
a processor, connected to the memory, configured to call and run the computer program from the memory, to implement the method according to the first aspect; and
a transceiver, configured to receive and send information during a process of exchanging information with other devices.

The present disclosure provides a data transmission method. In a case where the usage scenario of an application is a first scenario, the terminal device displays prompt information to the user through a display interface to recommend value-added services for the application to the user. The terminal device receives a confirmation operation from the user regarding the prompt information and sends a subscription instruction to a first network element to subscribe to the value-added service for the application. Finally, the terminal device transmits data of the application using the corresponding network slice based on the information related to the network slice sent by the first network element. In this way, the terminal device may promptly and accurately recommend value-added services to the user when the usage scenario is the first scenario. Moreover, in response to the user's confirmation operation, the value-added service is subscribed to, enabling the terminal device to use a network slice with better network quality to transmit application data. This results in a rapid improvement in communication smoothness after subscribing to the value-added service compared to before subscription. This contrast may help users understand the necessity of the value-added service, improve the user's experience, and thereby enhance the user's expectation for re-consumption. Additionally, users can choose whether to subscribe to the value-added service based on actual needs, thereby enabling users to precisely control network resources according to actual needs, achieving optimization of network efficiency.

### BRIEF DESCRIPTION OF THE DRAWINGS

FIG. 1 is a flowchart of a data transmission method according to some embodiments of the present disclosure.
FIG. 2 is a first interaction flowchart of a data transmission method according to some embodiments of the present disclosure.
FIG. 3 is a second interaction flowchart of a data transmission method according to some embodiments of the present disclosure.
FIG. 4 (a) is a first schematic diagram of an application scenario of a data transmission method according to some embodiments of the present disclosure.
FIG. 4 (b) is a second schematic diagram of an application scenario of a data transmission method according to some embodiments of the present disclosure.
FIG. 4 (c) is a third schematic diagram of an application scenario of a data transmission method according to some embodiments of the present disclosure.
FIG. 4 (d) is a fourth schematic diagram of an application scenario of a data transmission method according to some embodiments of the present disclosure.
FIG. 5 is a third interaction flowchart of a data transmission method according to some embodiments of the present disclosure.
FIG. 6 is a schematic structural diagram of a first data transmission apparatus according to some embodiments of the present disclosure.
FIG. 7 is a schematic structural diagram of a second data transmission apparatus according to some embodiments of the present disclosure.
FIG. 8 is a schematic structural diagram of a computer device according to some embodiments of the present disclosure.

### DETAILED DESCRIPTION

To understand the features and technical content of the embodiments of the present disclosure in more detail, the implementation of the embodiments of the present disclosure is described in detail below with reference to the accompanying drawings. The accompanying drawings are for reference and illustration only and are not intended to limit the embodiments of the present disclosure.

Unless otherwise defined, all technical and scientific terms used herein have the same meaning as commonly understood by those skilled in the art. The terms used herein are for the purpose of describing the embodiments of the present disclosure only and are not intended to limit the present disclosure.

In the following description, reference is made to "some embodiments", which describe a subset of all possible embodiments, but it should be understood that "some embodiments" may be the same subset or different subsets of all possible embodiments and may be combined with each other without conflict.

It should also be noted that the terms "first\second\third" involved in the embodiments of the present disclosure are only intended to distinguish similar objects and do not represent a specific ordering of the objects. It is to be understood that "first\second\third" may, where permitted, be interchanged in a specific order or sequence, such that the embodiments of the present disclosure described herein can be implemented in an order other than that illustrated or described herein.

Furthermore, reference to "an embodiment" herein means that a particular feature, structure, or characteristic described in connection with the embodiment may be included in at least one embodiment of the present disclosure. The appearances of the phrase in various places in the specification are not necessarily all referring to the same embodiment, nor are separate or alternative embodiments mutually exclusive of other embodiments. It is explicitly and implicitly understood by those skilled in the art that the embodiments described herein may be combined with other embodiments.

The related technologies of the present disclosure are introduced below.

Network slicing is introduced in Fifth Generation (5th Generation, 5G) Standalone Access (Standalone Access, SA). The 5G SA architecture is entirely based on the 5G core network. Through methods such as end-to-end slicing, resource isolation, or flexible configuration, the 5G SA architecture can support network slicing. Network slicing is a technology that, in a software-defined manner, creates multiple logically independent, end-to-end virtual networks on an operator's physical network infrastructure. The bandwidth, latency, etc., of each virtual network may be different, providing customized services for customers according to different business needs, thereby fully meeting the differentiated quality requirements of different customers and different applications for the network.

Currently, the service provisioning scheme for existing network slices involves users subscribing to packages in advance. Only then does the operator match the corresponding network slice service information for the user's mobile terminal, and subsequently provides the corresponding network resources to the user based on the corresponding network slice. However, in some scenarios, such as watching live streams, playing games, etc., if the traffic corresponding to the network resources provided by the user's subscribed package is too low to meet the current traffic demand, then freezing or stuttering will occur, affecting the user's experience. Or, in some scenarios, such as browsing the web or reading novels, if the traffic corresponding to the network resources provided by the user's subscribed package is very high, not only is the fee high, but the user also cannot experience the comparison in usage effect between the currently subscribed package and other packages with lower traffic, reducing the user's expectation for re-consuming higher-traffic packages. Moreover, when users actually use cellular networks for access, they can only use the network resources provided by their pre-subscribed packages to access the internet, which is inflexible. Users cannot precisely control network resources according to actual needs, reducing network efficiency.

Based on this, embodiments of the present disclosure provide a data transmission method, an apparatus, a computer device, and a program product. In a case where the usage scenario of an application is a first scenario, the terminal device displays prompt information to the user through a display interface to recommend value-added services for the application to the user. The terminal device receives a confirmation operation from the user regarding the prompt information and sends a subscription instruction to a first network element to subscribe to the value-added service for the application. Finally, the terminal device transmits data of the application using the corresponding network slice based on the information related to the network slice sent by the first network element. In this way, the terminal device may promptly and accurately recommend value-added services to the user when the usage scenario is the first scenario. Moreover, in response to the user's confirmation operation, the value-added service is subscribed to, enabling the terminal device to use a network slice with better network quality to transmit application data. This results in a rapid improvement in communication smoothness after subscribing to the value-added service compared to before subscription. This contrast may help users understand the necessity of the value-added service, improve the user's experience, and thereby enhance the user's expectation for re-consumption. Additionally, users can choose whether to subscribe to the value-added service based on actual needs, thereby enabling users to precisely control network resources according to actual needs, achieving optimization of network efficiency.

The present disclosure is further described in detail below through the accompanying drawings and specific embodiments.

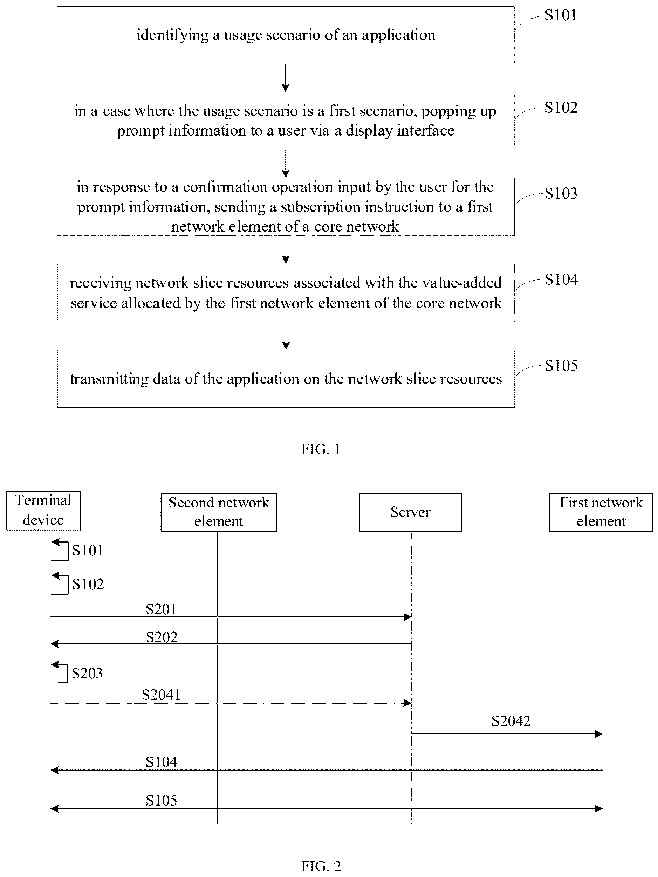

In some embodiments of the present disclosure, FIG. 1 is a flowchart of a data transmission method according to some embodiments of the present disclosure. The method may be applied to a terminal device, which may be referred to as User Equipment (UE). As shown in FIG. 1, the method may include operations at blocks illustrated herein.

At block S101: identifying a usage scenario of an application.

In the embodiments of the present disclosure, the usage scenario of the application may include scenarios corresponding to different states of the terminal device, or may include scenarios corresponding to different transmission conditions of the application currently running on the terminal device, or may include scenarios corresponding to different network conditions of the current environment in which the terminal device is located.

It should be noted that an Artificial Intelligence (AI) perception engine, or a system-level program, or other applications capable of monitoring other applications running on the terminal device may be running on the terminal device, which is not specifically limited herein. When the aforementioned perception engine or program is running, the terminal device can determine the usage scenario of the application based on information such as the terminal device's own status information, the location information of the terminal device, the number of terminal devices in a cell where the terminal device is located, the time delay of uplink and downlink data of the terminal device, and the uplink and downlink data traffic of the terminal device. For example, in a scenario where the number of terminal devices in the cell where the terminal device is located exceeds a preset terminal device threshold, a first network element, combined with the terminal device's location information being a football field, determines that the usage scenario of the terminal device is a football match or a concert. In another example, when it is detected that the temperature of the terminal device exceeds a temperature threshold, the usage scenario is excessive temperature. In another example, when applications with high real-time requirements such as live streaming, video, and audio are detected running on the terminal device, the downlink traffic demand is high, and the usage scenario is a scenario with high traffic demand.

At block S102: in a case where the usage scenario is a first scenario, popping up prompt information to a user via a display interface.

The prompt information may be configured to prompt the user about a subscribable value-added service.

In the embodiments of the present disclosure, the first scenario may include, among the usage scenarios of the terminal device, a scenario where the terminal device experiences poor uplink and downlink transmission, leading to unsmooth data transmission for the application, due to environmental reasons or its own high demands.

In the embodiments of the present disclosure, when it is identified that the usage scenario is the first scenario, and the terminal device experiences freezing or stuttering due to poor uplink and downlink data transmission, the terminal device may pop up prompt information on the display interface to recommend the subscribable value-added service for the application to the user.

It should be noted that the value-added service recommended by the terminal device to the user may refer to network resources with wider bandwidth and lower latency recommended to the user compared to the network resources provided by the first network element based on the user's currently subscribed network service. In this way, in the case where the usage scenario is the first scenario, after the user uses the value-added service, the problem of freezing caused by poor data transmission of the terminal device application will be noticeably mitigated.

It should be noted that the subscribable value-added service may be applied to the application the user is using when freezing occurs, or be applied to all current applications on the terminal device, or be applied to applications specified by the user, which is not specifically limited herein.

It should be noted that the prompt information may include an introduction to the value-added service, the time range and application scope of the value-added service for the user to select and subscribe to, as well as confirmation or cancellation buttons for the user, etc., which is not specifically limited herein.

It should be noted that when the terminal device is in a remote environment with few base stations, resulting in poor signal quality for the user and causing freezing, the usage scenario of the terminal device may not belong to the first scenario.

At block S103: in response to a confirmation operation input by the user for the prompt information, sending a subscription instruction to a first network element of a core network.

The subscription instruction may be configured to subscribe to the value-added service.

In the embodiments of the present disclosure, when the user chooses not to subscribe to the value-added service, the process returns to execute S101, and the prompt information may be displayed again after a preset time and when the terminal device is still in the first scenario.

Or, in some embodiments, based on the prompt information, the user chooses to subscribe to the value-added service and performs operations on the display interface of the terminal device, including selecting the type, duration, and application scope of the value-added service, and selecting confirmation, etc., to issue a confirmation operation to the terminal device, indicating to the terminal device that the value-added service is required to be subscribed to. The terminal device monitors the operations performed by the user and receives the corresponding confirmation operation. The confirmation operation may include: whether the user subscribes to the value-added service, the type, duration, application scope, etc., of the subscribed value-added service.

Further, based on the received confirmation operation, the terminal device sends a subscription instruction to the first network element to actually subscribe to the value-added service for the application. The subscription instruction may include: the type or number of the value-added service subscribed by the user, the subscription type, duration, application scope, etc.

It should be noted that the first network element in the embodiments of the present disclosure may be a network element related to slice functions, for example, a Network Slice Selection Function (NSSF) network element, or may be other network elements capable of implementing slice-related functions, which is not specifically limited herein.

At block S104: receiving network slice resources associated with the value-added service allocated by the first network element of the core network.

In the embodiments of the present disclosure, when the aforementioned terminal device displays prompt information to the user, and the user performs operations on the terminal device's display interface based on the prompt information to send a confirmation operation to the terminal device, which triggers the terminal device to send a subscription instruction to the first network element, the subscription instruction sent by the terminal device includes information such as the type and duration of the value-added service. The multiple network slices managed by the first network element belong to different types, and different types of network slices can provide the terminal device with services of different bandwidths, latencies, and numbers of shared users. After receiving the subscription instruction sent by the terminal device, the first network element determines the type of network slice associated with the value-added service that is required to be allocated to the terminal device based on the information in the subscription instruction, such as the type of value-added service subscribed by the user. The first network element further selects one or more network slices of this type from those the first network element manages as the corresponding network slice resources associated with the value-added service to be allocated to the terminal device, and sends the network slice resources to the terminal device.

It should be noted that the first network element may send the network slice resources associated with the value-added service to the terminal device via a downlink Non-Access Stratum (NAS) message.

It should be noted that the network slice resources may include Single Network Slice Selection Assistance Information (S-NSSAI), an index value for network switching, the bandwidth of the network slice, and authentication information for accessing the network slice, etc., which is not specifically limited herein.

At block S105: transmitting data of the application on the network slice resources.

In the embodiments of the present disclosure, after the terminal device obtains the information related to the network slice, it accesses the network slice indicated by the terminal device based on the relevant information from the first network element and uses this network slice to communicate with the first network element, receiving or uploading the application's data.

It should be noted that compared to the existing service, the value-added service subscribed to by the user offers better network quality, allocates wider bandwidth to the terminal device, and has lower latency. Therefore, after the user accesses the new network slice allocated by the first network element, in cases of high uplink/downlink data volume or freezing caused by network congestion, this freezing can be immediately alleviated. This allows the user to distinctly feel the smooth network experience brought by using the value-added service.

The embodiments of the present disclosure provide a data transmission method. In a case where the usage scenario of an application is a first scenario, the terminal device displays prompt information to the user through a display interface to recommend a value-added service for the application. The terminal device receives a confirmation operation from the user regarding the prompt information and sends a subscription instruction to the first network element to subscribe to the value-added service for the application. Finally, the terminal device transmits the application's data using the corresponding network slice based on the information related to the network slice sent by the first network element. In this way, the terminal device may promptly and accurately recommend the value-added services to the user when the usage scenario is the first scenario. Moreover, in response to the user's confirmation operation, the value-added service is subscribed to, enabling the terminal device to use a network slice with better network quality to transmit application data. This results in a rapid improvement in communication smoothness after subscribing to the value-added service compared to before subscription. This contrast may help users understand the necessity of the value-added service, improve the user's experience, and thereby enhance the user's expectation for re-consumption. Additionally, users can choose whether to subscribe to the value-added service based on actual needs, thereby enabling users to precisely control network resources according to actual needs, achieving optimization of network efficiency.

In other embodiments of the present disclosure, the first scenario includes one or more of the following:
detecting that the freeze rate of receiving the data of the application is greater than a first threshold;
detecting that the signal-to-interference-plus-noise ratio of the data of the application is less than a second threshold;
detecting that the number of terminal devices in the network is greater than a third threshold; and
detecting that the temperature of the terminal device is higher than a fourth threshold.

In the embodiments of the present disclosure, as mentioned earlier, when the terminal device experiences poor uplink/downlink data transmission due to various circumstances, it may be confirmed that the terminal device is in the first scenario.

For example, when the usage scenario of the terminal device is a scenario with high traffic demand, such as watching live streams or online videos, the bandwidth of the network slice provided by the network resources currently subscribed to by the terminal device does not meet the uplink/downlink traffic demand of the application. This causes the terminal device to freeze when displaying the live stream or video. When it is detected that the freeze rate of receiving the application's data is greater than a first threshold, the usage scenario of the terminal device may be considered as the first scenario.

In another example, when the usage scenario of the terminal device is a real-time communication application, such as video calls, audio calls, etc., the terminal device's real-time uplink/downlink traffic is high. The network slice currently subscribed to by the user cannot meet the data transmission demand, causing issues in real-time communication like audio or video freezing, frame drops, audio or video blurring, etc. That is, when the signal-to-noise ratio of the application's data is less than a second threshold, the usage scenario of the terminal device can be considered as the first scenario.

In another example, when the terminal device is in a usage scenario with high human density, such as a football match, concert, or gathering, and the density of terminal devices is greater than a third threshold, the usage scenario of the terminal device may be considered as the first scenario. In this case, because the terminal device needs to share the same one or multiple network slices with many other terminal devices, if the bandwidth of the network slice is narrow, network congestion is prone to occur, leading to significant delay. This causes freezing during data transmission of the application and when displaying on the user interface, affecting the user experience.

In another example, when the temperature of the terminal device is higher than a fourth threshold, the usage scenario of the terminal device may be confirmed as the first scenario. This is because the high temperature of the terminal device may be due to congestion in interaction with the network slice currently provided by the first network element, leading to continuous sending of requests to the network slice.

It should be noted that the above examples of the terminal device's usage scenario being the first scenario are merely illustrative. When the terminal device is in the first scenario, it may be simultaneously in multiple of the aforementioned possibilities, or it may further include other factors causing poor uplink/downlink data transmission due to the network slice currently connected to the terminal device. For instance, when the density of terminal devices is greater than the third threshold, and simultaneously the freeze rate of the application's data is greater than the first threshold. Alternatively, other combinations may be included, which are not enumerated herein.

It should be noted that the settings of the first threshold, the second threshold, the third threshold, and the fourth threshold mentioned above may be determined based on factors such as the general level acceptable to users in practice.

The embodiments of the present disclosure provide a data transmission method, exemplifying the situation where the usage scenario of the terminal device is the first scenario. In this way, it may, as much as possible, avoid situations where prompt information is triggered for display when the terminal device freezes due to its own device issues or poor signal, thereby avoiding the problem that network quality does not improve even after the user subscribes to the value-added service.

In some embodiments, the S102 of popping up prompt information to a user via a display interface may include one or more of the following:
popping up the subscribable value-added service to the user via the display interface;
popping up optional applications associated with the value-added service to the user via the display interface; and
popping up the optional effective duration for each application among the optional applications associated with the value-added service to the user via the display interface.

In one possible implementation, the terminal device popping up prompt information to the user on the display interface may be that the terminal device pops up the subscribable value-added service through the current display interface. For example, the terminal device may pop up a prompt box displaying "The current network is lagging. You can choose a value-added service to improve network service". The terminal device may further provide the user with controls to choose whether to select this value-added service, such as a control to select "Yes" and a control to select "No."

In another possible implementation, in addition to popping up the subscribable value-added service on the display interface, the terminal device may further pop up optional applications associated with the value-added service and/or the optional effective duration for each application among the optional applications on the current display interface.

It should be noted that the optional applications associated with the value-added service may be understood as which applications the value-added service can be used for, or in other words, which applications can use the value-added service. The optional applications may include the application currently used by the terminal device.

For example, when the terminal device pops up the prompt box, besides displaying "The current network is lagging. You can choose a value-added service to improve network service", it may further display icons or names of applications that can use this value-added service.

It should be noted that the optional effective duration of the application may be understood as the duration for which the application uses the value-added service, or in other words, the service duration of the value-added service.

For example, the optional effective duration may be in hours, days, or years, which is not limited in the embodiments of the present disclosure.

It should be noted that the prompt information popped up by the terminal device on the display interface may further include other information, such as the traffic, type, or cost of the value-added service, which is not specifically limited herein.

That is to say, the terminal device may provide the user with subscribable value-added services, as well as the applicable scope and/or service duration of the value-added service, through the display interface. In this way, the terminal device may provide users with flexible subscription strategies, assist operators in formulating flexible billing strategies, and make it easier for users to subscribe to the value-added service.

In some embodiments, when the terminal device pops up optional applications associated with the value-added service and the optional effective duration for each optional application to the user via the display interface, the user may make selections regarding the optional applications and/or optional effective duration provided by the terminal device.

For example, the terminal device pops up a prompt box, displaying "The current network is lagging. You can choose a value-added service to improve network service" in the prompt box. It may further display icons or names of applications that can use this value-added service, as well as the optional effective duration for each application. The terminal device may detect selection instructions from the user for various pieces of information in the prompt box.

It should be noted that the optional effective duration corresponding to each optional application may be displayed in a new prompt box that pops up after the user selects a certain application, or be displayed around each optional application. The embodiments of the present disclosure do not limit the display method.

It should be noted that after the terminal device pops up the above content on the display interface, the user may execute a first selection instruction for the optional applications displayed on the display interface. The execution method of the first selection instruction is not specifically limited herein. For example, by clicking to select one or more applications, the user selects the scope of applications that can use the value-added service, associating the selected application with the value-added service.

Or, in some embodiments, the user may further execute a second selection instruction for the application that is subjected to the first selection instruction. The execution method of the second selection instruction is not specifically limited herein. For example, the user may select the duration for which each application is associated with the value-added service by methods such as inputting in a dialog box, clicking buttons to select, or dragging a progress bar.

Based on this, in some embodiments, before the terminal device sends a subscription instruction to the first network element of the core network, the terminal device may perform the following steps:
in response to a first selection instruction from the user for optional applications associated with the value-added service, selecting an application; and/or,
in response to a second selection instruction from the user for the optional effective duration of the application, selecting the effective duration.

That is to say, the terminal device may respond to the user's selection instruction to determine the application and/or the effective duration of the application for selection.

Thus, in S103, when the terminal device sends the subscription instruction to the first network element of the core network, the first selection instruction and/or the second selection instruction may be sent together to the first network element of the core network. That is, the subscription instruction may further include the first selection instruction and/or the second selection instruction.

For example, the subscription instruction may include identification information of the application(s) selected via the first selection instruction, and/or the effective duration selected via the second selection instruction.

Through the method provided in the embodiments of the present disclosure, users may flexibly choose the scope and/or service duration for using the value-added service.

In other embodiments of the present disclosure, FIG. 2 is a first interaction flowchart of a data transmission method according to some embodiments of the present disclosure. As shown in FIG. 2, the S103 of sending a subscription instruction to a first network element of a core network may include operations as followed.

S201: The terminal device sends a subscription request to a second network element of the core network, and the second network element forwards the subscription request to a server; accordingly, the server receives the subscription request forwarded by the second network element of the core network receives from the terminal device.

The subscription request is configured to obtain a subscription link for the value-added service.

It should be noted that, for example, the second network element may be a user-plane network element, such as a User Plane Function (UPF) network element. For example, the terminal device may send the subscription request to the second network element via a base station, and the second network element may then send the subscription request to the first network element.

It should be noted that the terminal device may send the subscription request via the Hypertext Transfer Protocol (http). In other words, the subscription request may be an http request.

It should be noted that the subscription interface may be understood as the subscription link; the two are equivalent or interchangeable.

In the embodiments of the present disclosure, after clarifying the user's specific requirements for the value-added service based on the confirmation operation, the terminal device needs to send a subscription request to the server to inquire about the subscription link for the value-added service. It should be understood that, based on the displayed information, the user may click on the display interface to indicate a need to subscribe to the value-added service without selecting specific information related to the value-added service; the confirmation operation includes information indicating the user's confirmation to subscribe to the value-added service. Alternatively, the user may select information related to the value-added service on the display interface; the confirmation operation includes the user's confirmation to subscribe to the value-added service, as well as information such as duration and application scope.

S202: The server sends a response message to the second network element of the core network, and the second network element forwards the response message to the terminal device; accordingly, the terminal device receives the response message from the server.

The response message includes the subscription link for the value-added service.

It should be noted that the response message may be understood as response information; the two are equivalent or interchangeable.

It should be noted that after receiving the subscription request sent by the terminal device, the server may determine the subscription link for the value-added service based on the subscription request, carry the subscription link in the response message, and send it to the terminal device, that sent the subscription request, via the second network element.

S203: The terminal device pops up the subscription link to the user via the display interface.

As mentioned earlier, when the confirmation operation issued by the user includes information confirming the subscription to the value-added service but does not include other related information, then in this operation, the terminal device may display information such as the type, duration, and application scope of the value-added service that the user can subscribe to, based on the information fed back in the subscription link from the server.

S2041: The terminal device, in response to a subscription operation input by the user for the subscription link, sends the subscription instruction to the second network element of the core network, and the second network element forwards the subscription instruction to the server.

The subscription instruction is configured to subscribe to the value-added service associated with the network slice resources.

In the embodiments of the present disclosure, the user performs a subscription operation based on the displayed prompt information; the terminal device monitors the user's subscription operation, determines the related information of the value-added service selected by the user, and generates a subscription instruction.

It should be noted that the value-added service may be understood as a value-added package; the two are equivalent or interchangeable.

Alternatively, in some embodiments, information from the subscription link is pre-stored in the terminal device. Based on the user's confirmation operation, the terminal device may clarify the specific requirements of the user's subscription to the value-added service. The specific requirements include the type of value-added service the user wishes to subscribe to, the duration of the subscribed value-added service, the application scope in which the subscribed value-added service can be used, etc. Then, in this operation, the subscription instruction can be generated directly.

It should be noted that the terminal device may send the subscription instruction via the Hypertext Transfer Protocol (http). In other words, the subscription instruction may be an http request.

It should be understood that the user operates on the display interface of the terminal device, and what the terminal device receives is the user's instruction to subscribe to the value-added service (confirmation operation). Only after receiving this instruction does the terminal device send the subscription instruction to the server via the second network element. The subscription instruction is configured for the server to actually execute the subscription operation with the first network element.

S2042: The server receives the subscription instruction from the terminal device forwarded via the second network element of the core network and sends the subscription instruction to the first network element of the core network.

In the embodiments of the present disclosure, the terminal device sends the generated subscription instruction to the server. After receiving the subscription instruction, the server sends the subscription instruction to the first network element. Based on the content in the subscription instruction, including the type of value-added service the user wishes to subscribe to, the duration of the subscribed value-added service, the application scope in which the subscribed value-added service can be used, etc., the first network element creates or allocates a corresponding network slice for the terminal device. Then, following the operations in the aforementioned embodiments, the information related to the network slice is sent to the terminal device.

It should be understood that what the terminal device subscribes to is the value-added service provided by the first network element. Specifically, the first network element creates or allocates a network slice with better network quality for the terminal device. The terminal device communicates with network nodes based on this network slice, alleviating the freezing situation that occurs when the terminal device is in the first scenario described earlier.

In some embodiments, the S2041, where the terminal device, in response to a subscription operation input by the user for the subscription link, sends the subscription instruction to the second network element of the core network, and the second network element forwards the subscription instruction to the server, may include the following.

S301: In response to the subscription operation input by the user for the subscription link, the terminal device pops up optional applications associated with the value-added service and/or the optional effective duration for each application among the optional applications to the user via the display interface.

In the embodiments of the present disclosure, after obtaining the subscription link sent from the server, the terminal device may pop up or display the subscription link on the display interface. The user may input a subscription operation for the subscription link to purchase the value-added service.

It should be noted that the user may input an operation to not subscribe for the subscription link. When the terminal device detects that the user inputs an operation to not subscribe for the subscription link, it may return to the display interface of the current application to continue the current service.

It should be understood that when the terminal device detects that the user inputs a subscription operation for the subscription link (e.g., clicking on the subscription link or long-pressing the subscription link), it may respond to the user's subscription operation for the subscription link and pop up optional applications associated with the value-added service and/or the optional effective duration for each application among the optional applications to the user via the display interface.

It should be noted that optional applications associated with the value-added service may be understood as which applications the value-added service can be used for, or in other words, which applications can use the value-added service. The optional applications may include the application currently used by the terminal device.

For example, after detecting the user's subscription operation for the subscription link, the terminal device may pop up a prompt box displaying icons or names of applications that can use the value-added service. Alternatively, after detecting the user's subscription operation for the subscription link, the terminal device may jump to a new display interface and display icons or names of applications that can use the value-added service to the user on the new display interface. The embodiments of the present disclosure do not limit the display method of optional applications.

It should be noted that the optional effective duration of the application may be understood as the duration for which the application uses the value-added service, or in other words, the service duration of the value-added service.

For example, the optional effective duration may be in hours, days, or years, which is not limited in the embodiments of the present disclosure.

It should be noted that the optional effective duration corresponding to each optional application may be displayed in a new prompt box that pops up after the user selects a certain application, or be displayed around each optional application. The embodiments of the present disclosure do not limit the display method.

It should be noted that the terminal device may further display other information to the user via the display interface based on the information in the subscription interface, such as the traffic, type, or cost of the value-added service, which is not specifically limited herein.

S302: In response to a first selection instruction from the user for optional applications associated with the value-added service, the terminal device selects an application; and/or, in response to a second selection instruction from the user for the optional effective duration of the application, the terminal device selects an effective duration.

In the embodiments of the present disclosure, the user may execute a first selection instruction for the optional applications displayed on the display interface. The execution method of the first selection instruction is not specifically limited herein. For example, by clicking to select one or more applications, the user selects the scope of applications that can use the value-added service, associating the selected applications with the value-added service.

Alternatively, in some embodiments, the user may further execute a second selection instruction for the application that is subjected to the first selection instruction. The execution method of the second selection instruction is not specifically limited herein. For example, the user may select the duration for which each application is associated with the value-added service by methods such as inputting in a dialog box, clicking buttons to select, or dragging a progress bar.

S303: The terminal device sends the subscription instruction to the second network element of the core network, which is forwarded to the server.

The subscription instruction includes the first selection instruction and/or the second selection instruction.

In the embodiments of the present disclosure, after the user completes the first selection instruction and/or the second selection instruction, a confirmation operation may be performed on the display interface, the terminal device generates the subscription instruction, and sends it to the server via the second network element.

In some embodiments, the subscription instruction includes one or more of the following:
identification information of the application selected through the first selection instruction; and
the effective duration selected through the second selection instruction.

The first selection instruction is a selection instruction triggered by the user on the display interface of the terminal device for optional applications associated with the value-added service; the second selection instruction is a selection instruction triggered by the user on the display interface of the terminal device for the optional effective duration of the optional application.

In the embodiments of the present disclosure, the identification information of the application may include the application's icon, name, description, or a combination of two or more of these, which is not specifically limited herein.

As mentioned earlier, in the case where the terminal device displays to the user the applications that can be associated with the value-added service, based on the user's subscription operation for the subscription interface, the terminal device obtains the corresponding subscription instruction. In the embodiments of the present disclosure, based on monitoring the user's first selection operation for the identification information of the applications that can be associated with the displayed value-added service, such as clicking to select, the terminal device may determine which application(s) the user needs to associate with the value-added service.

In the embodiments of the present disclosure, the effective duration may be displayed on the display interface in various ways, such as input, selection, etc. When the user has not performed a second selection operation, default effective duration options related to the aforementioned value-added service subscribed to by the user may be provided, which is not specifically limited herein.

In some embodiments, in the case where the terminal device further displays to the user the optional effective duration for each application among the applications that can be associated with the value-added service, based on the user's second selection operation, the terminal device monitors the effective duration set by the user for each of the aforementioned associated applications. Within the effective duration, the value-added service can be provided to its corresponding associated application. The optional effective duration for each application may be displayed as a default value when the user has not adjusted it.

It should be noted that the number of applications associated with the value-added service and the different effective durations of each associated application both affect the cost of the value-added service. The terminal device may monitor the user's subscription operation, calculate in real-time, and display the cost corresponding to the current user's selection.

It should be noted that the types of value-added services that can be provided may further be displayed to the user. Different types of value-added services have different limitations on bandwidth, duration, or traffic, or offer different levels of improvement in network quality, which is actually determined based on the network slices that the first network element can provide.

In some embodiments, the subscription request, and/or, the subscription instruction includes one or more of the following:
International Mobile Equipment Identity (IMEI) of the terminal device;
Public Land Mobile Network (PLMN) associated with the terminal device; and
International Mobile Subscriber Identification Number (IMSI) of the terminal device.

Among them, IMEI is a digital sequence configured to uniquely identify the terminal device, for identifying the terminal device in a mobile phone network. IMEI is usually composed of 15 digits, and in some cases, a 1-digit check digit may be set.

PLMN is configured to identify different mobile network operators, including mobile country code and mobile network code, thereby enabling the server to determine the location of the terminal device.

IMSI is configured to distinguish different users in a cellular network. The server can determine information such as the identity of the terminal device and its affiliated operator based on the IMSI.

It should be noted that the subscription request, and/or, the subscription instruction should at least include information configured to uniquely identify the terminal device, such as at least one of IMEI and IMSI.

It should be noted that the above information in the subscription request may indicate to the server which terminal device requested the subscription interface, indicating the receiving device for the response message. The above information in the subscription instruction may indicate to the server which terminal device subscribed to the value-added service.

The embodiments of the present disclosure provide a data transmission method. The terminal device sends a subscription request to the server, receives a response message fed back by the server, and based on the response message, displays applications that can be associated with the value-added service and the optional effective duration for each application. In response to the user's subscription operation for the displayed content, an order instruction for the subscription interface is obtained and sent to the server to subscribe to the value-added service selected by the user. In this way, when the usage scenario of the terminal device is the first scenario, the value-added service may be accurately recommended for the user to subscribe to, and the user may control factors such as the application scope associated with the value-added service and the usage duration, making it easier for consumers to accept subscribing to the value-added service. Moreover, after subscription, the network quality is significantly improved, making it easier for users to understand the necessity of the value-added service.

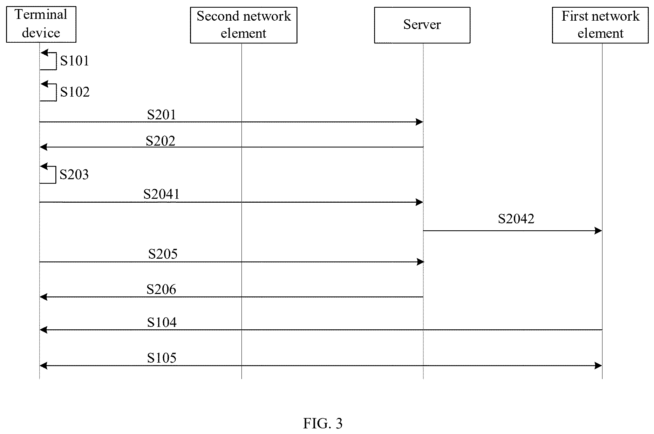

In other embodiments of the present disclosure, FIG. 3 is a second interaction flowchart of a data transmission method according to some embodiments of the present disclosure. As shown in FIG. 3, after the S2041, where the terminal device, in response to a subscription operation input by the user for the subscription link, sends the subscription instruction to the second network element of the core network, and the second network element forwards the subscription instruction to the server, the method may further include the following.

S205: The terminal device sends a query request to the second network element of the core network, and the second network element forwards the query request to the server; accordingly, the server receives the query request from the terminal device forwarded by the second network element of the core network.

The query request is configured to query whether the value-added service has taken effect.

It should be noted that the terminal device may send the query request via the Hypertext Transfer Protocol (http). In other words, the query request may be an http request.

In the embodiments of the present disclosure, based on the previous embodiments, after the terminal device sends the subscription instruction to the server, the terminal device may further send a query request to the server via the second network element to confirm whether the value-added service has taken effect, e.g. including whether the server has already created or allocated the corresponding network slice for the terminal device, and whether the network slice can meet the requirements of the value-added service subscribed by the user, that is, whether the user can perform uplink and downlink data transmission based on this network slice.

S206: The server sends a first subscription result to the second network element of the core network, and the second network element forwards the first subscription result to the terminal device; accordingly, the terminal device receives the first subscription result from the server.

The first subscription result is configured to indicate that the value-added service has taken effect.

In the embodiments of the present disclosure, the server may respond to the query request from the terminal device, determine whether the aforementioned value-added service has taken effect, generate a first subscription result, and feed it back to the terminal device via the second network element.

It should be noted that whether the value-added service has taken effect may be understood as whether the first network element is triggered to send information related to the network slice to the terminal device, or in other words, whether the information related to the network slice is ready.

In some embodiments, when the server receives the query request and has not triggered the first network element to send information related to the network slice to the terminal device, it sends a second subscription result to the terminal device. The second subscription result is configured to indicate that the value-added service has not taken effect.

In the embodiments of the present disclosure, after receiving the second subscription result, the terminal device may wait for a period of time and execute S205 again after a first duration.

In some embodiments, the first subscription result includes one or more of the following:
identification information of the network slice resources for which the first network element has been triggered to send;
identification information of the application corresponding to the first selection instruction; and
effective duration corresponding to the second selection instruction.

The first selection instruction is a selection instruction triggered by the user on the display interface of the terminal device for optional applications associated with the value-added service; the second selection instruction is a selection instruction triggered by the user on the display interface of the terminal device for the optional effective duration of the optional application.

In the embodiments of the present disclosure, the first subscription result should at least include identification information of the network slice resources, and the terminal device may access the corresponding network slice based on the identification information of the network slice resources.

In some embodiments, in the case where the aforementioned subscription instruction includes identification information of the application associated with the value-added service, the first subscription result may include identification information of the application corresponding to the value-added service, configured to confirm to the terminal device the application associated with the value-added service.

In some embodiments, in the case where the aforementioned subscription instruction includes the effective duration for each application in the application associated with the value-added service, the first subscription result may include the effective duration of the value-added service corresponding to the second selection instruction, configured to confirm to the terminal device the usage duration situation of each application associated with the value-added service.

It should be understood that in cases where the subscription instruction includes other information, the first subscription result may include its corresponding information, which is not specifically limited herein.

The embodiments of the present disclosure provide a data transmission method. After sending the subscription instruction, the terminal device sends a query request to the server, and determines whether the value-added service has taken effect based on the first subscription result fed back by the server. In this way, the reliability of the terminal device accessing the network slice may be improved.

In some embodiments of the present disclosure, the network slice resources in S104 may be carried in the User Equipment Route Selection Policy (URSP) sent by the first network element.

URSP can bind specific application data to different network slices. Specifically, URSP can bind specific application data to different PDU sessions for transmission. Since PDU session parameters include information related to the network slice, URSP rules can be configured to bind specific application data to different network slices.

It should be understood that each URSP may contain multiple URSP rules, and each URSP rule contains a Traffic Descriptor (TD) configured to match specific application data. For example, the traffic descriptor may include application identifier, information related to the network slice, Data Network Name (DNN), etc., which are not limited in the embodiments of the present disclosure.

Different application data may be matched to different URSP rules, and each URSP rule corresponds to different PDU session attribute parameters, including information to distinguish different network slices. Different PDU sessions can transmit data to application servers outside the network.

In some embodiments of the present disclosure, before the S105 of transmitting data of the application on the network slice resources, the method further includes the following.

S207: The terminal device sends a PDU session establishment request to a third network element of the core network via an access network device; where the PDU session establishment request includes identification information of the network slice resources.

S208: The terminal device receives a PDU session establishment confirmation message from the third network element of the core network. The PDU session establishment confirmation message is configured to bind the data of the application to the network slice resources.

In the embodiments of the present disclosure, the third network element may be a network element device with session management function, such as a Session Management Function (SMF) network element, or other network elements capable of implementing this function, which is not specifically limited herein.

It should be noted that after obtaining the information related to the network slice, the terminal device cannot actually use the service provided by the network slice. It still needs to request the establishment of a PDU session required for the application data. Only after the corresponding PDU session is established can the terminal device start using the subscribed value-added service. That is, after the PDU session is established, the terminal device can start transmitting data of the application on the network slice.

In the S207, the terminal device may send a PDU session establishment request to the third network element (e.g., SMF) of the core network, and carry the information related to the network slice in the PDU session request.

The terminal device may send a NAS message to the AMF network element of the core network, carrying the PDU session establishment request through the NAS message. Further, the AMF network element of the core network may select a core network third network element (e.g., SMF network element) capable of providing the service based on the information related to the network slice, and send the PDU session establishment request to this SMF. The SMF may select a UPF network element corresponding to the network slice and establish a tunnel between the UPF and the base station for transmitting the data of the application using the value-added service.

Then, in the S208, the third network element (e.g., SMF network element) of the core network may send the PDU session establishment confirmation information to the terminal device, notifying the terminal device that the session is successfully established and assigning a PDU address to the terminal device. The PDU session establishment confirmation message is placed in a downlink NAS transmission message and forwarded to the terminal device by the AMF. In this way, after the PDU session is established, the terminal device can use the network slice bound to this PDU session to transmit application data.

In other embodiments of the present disclosure, in the case where the usage scenario is the first scenario, a network parameter control is displayed to the user on the display interface with first display parameters.

In a case where the data of the application is transmitted on the network slice resources, the network parameter control is displayed to the user on the display interface with second display parameters; network parameters characterized by the second display parameters are superior to network parameters characterized by the first display parameters.

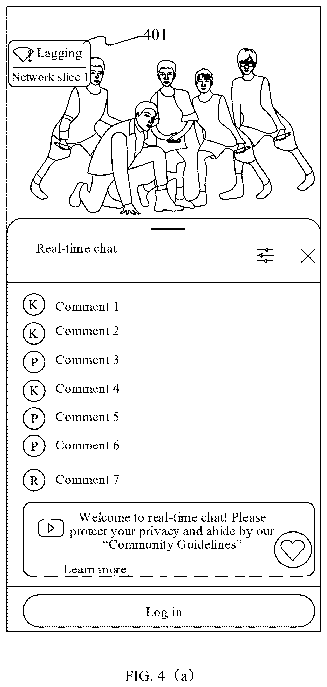

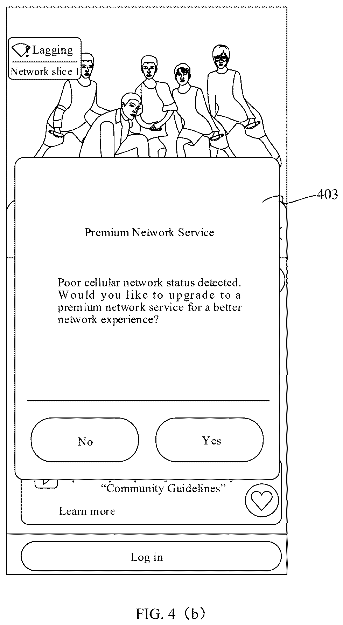

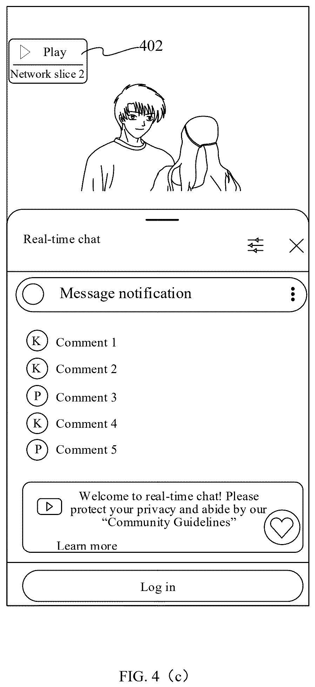

In the embodiments of the present disclosure, taking the application scenario where a user uses a mobile terminal to watch a live stream as an example, as shown in FIG. 4(a), the live stream picture is played on the interface of the mobile terminal. However, the quality of the network resources of the network slice provided by the package currently subscribed to by the user is poor, which may not meet the traffic demand of the terminal device for watching the live stream. In this case, a network speed control 401 based on first display parameters is displayed in the upper left corner of the display interface (live stream picture). For example, the first display parameters shown in FIG. 4(a) include the word "lag", an icon in the shape of lag, and a red background, etc., to inform the user that the current traffic demand of the terminal device is not met, resulting in lag in the picture. As shown in FIG. 4(b), after the terminal device detects the above situation, an interface pops up, displaying prompt information 403, asking the user whether he/she needs to subscribe to a network slice with better quality network resources. When the user selects "Yes", then based on the data transmission method provided in the embodiments of the present disclosure, a network slice with better quality and better network parameters is initiated. As shown in FIG. 4(c), based on the network resources provided by the newly initiated network slice, the live stream picture on the terminal device returns to smooth. A network control 402 based on second display parameters is displayed in the upper left corner of the live stream picture. For example, as shown in FIG. 4(c), the second display parameters include the word "smooth", an icon in the shape of playback, and a green background, etc., and the live stream picture is played for the user. When the user selects "No", the situation returns to that shown in FIG. 4(a), and the user still experiences lag. In this way, the user can clearly perceive the obvious usage difference after subscribing to the recommended service.

It should be noted that the first display parameters and the second display parameters may further include information related to the network slice, or may include information related to the current network speed and network quality of the terminal device, which is not specifically limited herein.

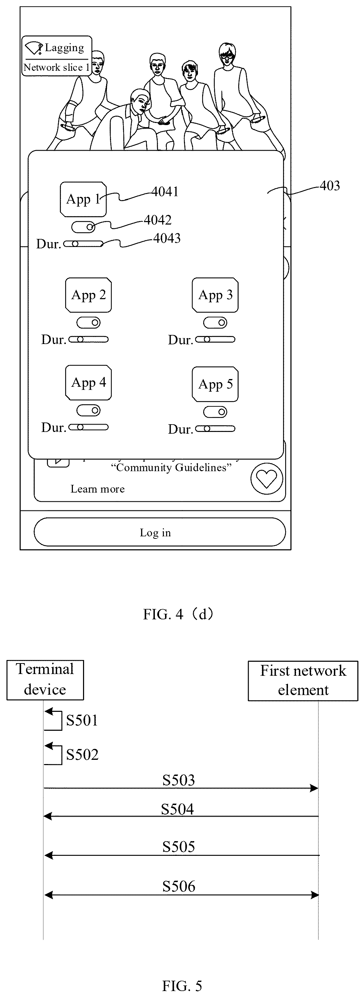

It should be noted that, as shown in FIG. 4(d), after the user clicks "Yes" on the prompt information shown in FIG. 4(b), an interface as shown in FIG. 4(d) may be displayed to the user, showing the user the icons of at least one application that can be associated with the value-added service, buttons for the user to choose whether to select the application, and the duration for which the user chooses to associate the application. For example, the icon 4041 of Application 1, the button 4042 for whether to select Application 1, and a progress bar 4043 that the user can drag to select the duration for which Application 1 is associated with the value-added service. It should be understood that FIG. 4(d) is an optional embodiment; the terminal device may display this to the user in other ways, which is not specifically limited herein.

In some embodiments, the first display parameters and/or the second display parameters include one or more of the following:
display color, shape, text format, font size.

In the embodiments of the present disclosure, the terminal device may display the first display parameters and/or the second display parameters on the network speed control with different display colors, shapes, text formats, etc. For example, when the first display parameters are displayed on the network speed control, the background color may be a conspicuous red with a larger font; when the second display parameters are displayed on the network speed control, the background color may be green with a smaller font, etc.

It should be noted that the terminal device may control other display methods of the first display parameters and the second display parameters to be different, such that users can visually distinguish them clearly, such as icons, which are not listed one by one herein.

The embodiments of the present disclosure provide a data transmission method. In a case where the usage scenario of the terminal device is the first scenario, the network speed control is displayed with the first display parameters; after the terminal device connects to the network slice, the network speed control is displayed with the second display parameters; and the first display parameters and the second display parameters are distinguished in terms of display color, shape, text format, font size, etc. In this way, this display method may remind the user of the current lag and alert the user to the change in network quality after connecting to the network slice. This reminder method is intuitive and strengthens the user's positive impression of the value-added service.

Below, a data transmission method provided by the embodiments of the present disclosure is described in detail in conjunction with specific application scenarios.

In the embodiments of the present disclosure, AI technology may be configured to identify whether the user's application encounters network lag or congestion during use. The network slice is initiated in real-time through a network API-specific application programming interface (API calls, slice creation, slice verification, and slice deployment). Through API calls, parameters such as the bandwidth, latency, and QoS of the slice can be created or adjusted in real-time. FIG. 5 is a third interaction flowchart of a data transmission method according to some embodiments of the present disclosure. As shown in FIG. 5, the data transmission method may include the following operations.

S501: The terminal device determines whether a switch of an AI perception engine program on the terminal device is turned on; when the switch is turned on, AI perceives whether the usage scenario of the terminal device is a first scenario.

In the embodiments of the present disclosure, the AI perception engine program refers to a low-level algorithm or application set on the terminal device, configured to monitor the traffic of the terminal device, perceive the lag situation of application usage in real-time, such as video lag, unclear calls, or other specific application scenarios, such as excessively high temperature.

S502: In a case where the terminal device identifies that the usage scenario is the first scenario, the terminal device displays prompt information, consulting the user on whether to subscribe to a value-added service.

S503: In a case where the user confirms subscription to the value-added service, the terminal device constructs information required for an Application Programming Interface (API) and transmits a network API command (subscription instruction) to a first network element in the network, invoking a network API.

S504: The server parses content of the subscription instruction and, based on the parsed content, sends an instruction to the first network element in the network; the first network element triggers the generation of URSP and delivers it to the terminal device.

S505: The first network element establishes a PDU session with the terminal device.

S506: Data routing is bound between the first network element and the terminal device, thereby establishing a new network slice channel between the first network element and the terminal device to improve the communication quality of the original network slice channel.

Among them, based on the aforementioned FIG. 3, the S503 of the terminal device invoking the network API may include the following.

S5031: The terminal device sends a subscription request to the server to inquire about a subscription interface for the value-added service.

S5032: The terminal device sends a subscription instruction to the server, and the server sends the subscription instruction to the first network element.

S5033: The terminal device sends a query request to the server to obtain a first subscription result fed back by the first network element.

The embodiments of the present disclosure provide a data transmission method, which may determine whether the network is congested through algorithms and then make precise recommendations. This not only allows users to learn about this service but also ensures that the network access smoothness is improved after the user subscribes. This differentiated experience may increase user stickiness. Moreover, users may control the application scope and duration of the subscribed slice network, providing users with more choices and improving the flexibility of use. In addition, the AI perception engine program runs at the bottom layer of the terminal device, perceiving the traffic of each application and processing the slice logic, reducing the difficulty of implementing and maintaining the method.

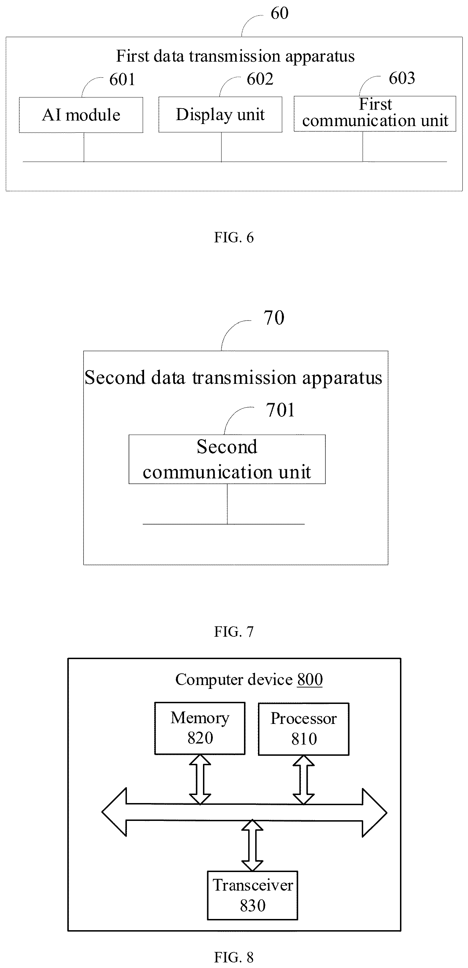

In other embodiments of the present disclosure, FIG. 6 is a schematic structural diagram of a first data transmission apparatus according to some embodiments of the present disclosure. As shown in FIG. 6, the first data transmission apparatus 60 includes:
an AI module 601, configured to identify a usage scenario of an application;
a display unit 602, configured to, in a case where the usage scenario is a first scenario, display prompt information to the user by popping the prompt information up on a display interface; where the prompt information is configured to prompt the user about a subscribable value-added service; and
a first communication unit 603, configured to, in response to a confirmation operation input by the user for the prompt information, send a subscription instruction to a first network element of a core network; wherein the subscription instruction is configured to subscribe to the value-added service.

The first communication unit 603 is further configured to receive network slice resources associated with the value-added service allocated by the first network element of the core network.

The first communication unit 603 is further configured to transmit data of the application on the network slice resources.

In some embodiments, the first scenario includes one or more of the following:
detecting that the freeze rate of receiving the data of the application is greater than a first threshold;
detecting that the signal-to-interference-plus-noise ratio of the data of the application is less than a second threshold;
detecting that the number of terminal devices in the network is greater than a third threshold; and
detecting that the temperature of the terminal device is higher than a fourth threshold.

In some embodiments, the popping up prompt information to a user via a display interface may include one or more of the following:
popping up the subscribable value-added service to the user via the display interface;
popping up optional applications associated with the value-added service to the user via the display interface; and
popping up the optional effective duration for each application among the optional applications associated with the value-added service to the user via the display interface.

In some embodiments, the display unit 602 is further configured to, in response to a first selection instruction from the user for optional applications associated with the value-added service, select an application; and/or, in response to a second selection instruction from the user for the optional effective duration of the application, select the effective duration.

In some embodiments, the first communication unit 603 is further configured to: send a subscription request to a second network element of the core network, for the second network element to forward the subscription request to a server, where the subscription request is configured to obtain a subscription link for the value-added service; receive a response message from the server, where the response message includes the subscription link for the value-added service; pop up the subscription link to the user through the display interface; and in response to a subscription operation input by the user for the subscription link, send the subscription instruction to the second network element of the core network, for the second network element to forward the subscription instruction to the server, and send the subscription instruction to the first network element of the core network through the server.

In some embodiments, the first communication unit 603 is further configured to: in response to a subscription operation input by the user for the subscription link, pop up optional applications associated with the value-added service and/or the optional effective duration for each application among the optional applications to the user through the display interface; in response to a first selection instruction from the user for the optional applications associated with the value-added service, select an application; and/or, in response to a second selection instruction from the user for the optional effective duration of the application, select an effective duration; and send the subscription instruction to the second network element of the core network, for the second network element to forward the subscription instruction to the server, where the subscription instruction includes the first selection instruction and/or the second selection instruction.

In some embodiments, the subscription instruction includes one or more of the following:
identification information of the application selected through the first selection instruction; and
the effective duration selected through the second selection instruction.

In some embodiments, the subscription request, and/or, the subscription instruction includes one or more of the following:
International Mobile Equipment Identity (IMEI) of the terminal device;
Public Land Mobile Network (PLMN) associated with the terminal device; and
International Mobile Subscriber Identification Number (IMSI) of the terminal device.

In some embodiments, the first communication unit 603 is further configured to: send a query request to the second network element of the core network, for the second network element to forward the query request to the server, where the query request is configured to query whether the value-added service has taken effect; and receive a first subscription result from the server, where the first subscription result is configured to indicate that the value-added service has taken effect.

In some embodiments, the first subscription result includes one or more of the following:
identification information of the network slice resources for which the first network element has been triggered to send;
identification information of the application corresponding to the first selection instruction; and
effective duration corresponding to the second selection instruction.

In some embodiments, the first communication unit 603 is further configured to: send a PDU session establishment request to a third network element of the core network via an access network device, where the PDU session establishment request includes identification information of the network slice resources; and receive a PDU session establishment confirmation message from the third network element of the core network, where the PDU session establishment confirmation message is configured to bind the data of the application to the network slice resources.

In some embodiments, the display unit 602 is configured to: in a case where the usage scenario is the first scenario, display a network parameter control to the user on the display interface with first display parameters; and in a case where the application's data is transmitted on the network slice resources, display the network parameter control to the user on the display interface with second display parameters; where network parameters characterized by the second display parameters are superior to network parameters characterized by the first display parameters.

In some embodiments, the display unit 602 is configured such that the first display parameters and/or the second display parameters include one or more of the following: display color, shape, text format, and font size.

In other embodiments of the present disclosure, FIG. 7 is a schematic structural diagram of a second data transmission apparatus according to some embodiments of the present disclosure. As shown in FIG. 7, the second data transmission apparatus 70 includes:
a second communication unit 701, configured to receive a subscription request from a terminal device forwarded by a second network element of a core network; where the subscription request is configured to obtain a subscription link for a value-added service.

The second communication unit 701 is further configured to send a response message to the second network element of the core network, for the second network element to forward the response message to the terminal device; where the response message includes the subscription link for the value-added service.

The second communication unit 701 is further configured to receive a subscription instruction from the terminal device forwarded by the second network element of the core network, and send the subscription instruction to a first network element of the core network; where the subscription instruction is configured to subscribe to the value-added service associated with network slice resources.

In some embodiments, the subscription request, and/or, the subscription instruction includes one or more of the following:
International Mobile Equipment Identity (IMEI) of the terminal device;
Public Land Mobile Network (PLMN) associated with the terminal device; and
International Mobile Subscriber Identification Number (IMSI) of the terminal device.

In some embodiments, the subscription instruction further includes one or more of the following:
identification information of an application selected through a first selection instruction; and
an effective duration selected through a second selection instruction.

The first selection instruction is a selection instruction triggered by the user on the display interface of the terminal device for optional applications associated with the value-added service; the second selection instruction is a selection instruction triggered by the user on the display interface of the terminal device for the optional effective duration of the optional application.

In some embodiments, the second communication unit 701 is further configured to: receive a query request from the terminal device forwarded by the second network element of the core network, where the query request is configured to query whether the value-added service has taken effect; send a first subscription result to the second network element of the core network, for the second network element to forward the first subscription result to the terminal device, where the first subscription result is configured to indicate that the value-added service has taken effect.

In some embodiments, the first subscription result includes one or more of the following:
identification information of a network slice for which a network device has been triggered to send;
relevant information of the application selected through the first selection instruction; and
the effective duration selected through the second selection instruction.

The first selection instruction is a selection instruction triggered by the user on the display interface of the terminal device for optional applications associated with the value-added service; the second selection instruction is a selection instruction triggered by the user on the display interface of the terminal device for the optional effective duration of the optional application.

In other embodiments of the present disclosure, FIG. 8 is a schematic structural diagram of a computer device according to some embodiments of the present disclosure. As shown in FIG. 8, the computer device 800 includes:
a memory 820, configured to store a computer program;
a processor 810, connected to the memory 820, configured to call and run the computer program from the memory to implement the method executed by a terminal device or the method executed by a server; and
a transceiver 830, configured to receive and send information during the process of exchanging information with other devices.

Among them, the memory 820 may be a separate device independent of the processor 810, or may be integrated into the processor 810.

In some embodiments, as shown in FIG. 8, the computer device 800 may further include a transceiver 830. The processor 810 may control the transceiver 830 to communicate with other devices, specifically, sending information or data to other devices, or receiving information or data sent by other devices.

The transceiver 830 may include a transmitter and a receiver. The transceiver 830 may further include an antenna, and the number of antennas may be one or more.

In some embodiments, the computer device 800 may specifically be the first network element in the embodiments of the present disclosure, and the computer device 800 may implement the corresponding processes performed by the first network element in the various methods of the embodiments of the present disclosure. For brevity, details are not repeated herein.

In some embodiments, the computer device 800 may specifically be the mobile terminal/terminal device in the embodiments of the present disclosure, and the computer device 800 may implement the corresponding processes performed by the mobile terminal/terminal device in the various methods of the embodiments of the present disclosure. For brevity, details are not repeated herein.

The embodiments of the present disclosure further provide a computer-readable storage medium for storing a computer program.

In some embodiments, the computer-readable storage medium may be applied to the first network element or terminal device in the embodiments of the present disclosure, and the computer program causes a computer to execute the corresponding processes performed by the first network element or terminal device in the various methods of the embodiments of the present disclosure. For brevity, details are not repeated herein.

In some embodiments, the computer-readable storage medium may be applied to the mobile terminal/terminal device in the embodiments of the present disclosure, and the computer program causes a computer to execute the corresponding processes performed by the mobile terminal/terminal device in the various methods of the embodiments of the present disclosure. For brevity, details are not repeated herein.

The embodiments of the present disclosure further provide a computer program product, including computer program instructions.

In some embodiments, the computer program product may be applied to the first network element or terminal device in the embodiments of the present disclosure, and the computer program instructions cause a computer to execute the corresponding processes performed by the first network element or terminal device in the various methods of the embodiments of the present disclosure. For brevity, details are not repeated herein.

In some embodiments, the computer program product may be applied to the mobile terminal/terminal device in the embodiments of the present disclosure, and the computer program instructions cause a computer to execute the corresponding processes performed by the mobile terminal/terminal device in the various methods of the embodiments of the present disclosure. For brevity, details are not repeated herein.

The embodiments of the present disclosure further provide a computer program.

In some embodiments, the computer program may be applied to the first network element or terminal device in the embodiments of the present disclosure. When the computer program runs on a computer, it causes the computer to execute the corresponding processes performed by the first network element or terminal device in the various methods of the embodiments of the present disclosure. For brevity, details are not repeated herein.

In some embodiments, the computer program may be applied to the mobile terminal/terminal device in the embodiments of the present disclosure. When the computer program runs on a computer, it causes the computer to execute the corresponding processes performed by the mobile terminal/terminal device in the various methods of the embodiments of the present disclosure. For brevity, details are not repeated herein.

It should be understood that the mention of "an embodiment" or "one embodiment" or "some embodiments" throughout the specification means that a specific feature, structure, or characteristic related to the embodiment is included in at least one embodiment of the present disclosure. Therefore, the appearances of "in an embodiment", "in one embodiment", or "in some embodiments" in various places throughout this specification are not necessarily referring to the same embodiment. Furthermore, these specific features, structures, or characteristics may be combined in one or more embodiments in any suitable manner. It should be understood that, in the various embodiments of the present disclosure, the order of the sequence numbers of the above processes does not imply the order of execution. The execution order of each process should be determined by its function and inherent logic, and should not constitute any limitation on the implementation process of the embodiments of the present disclosure. The sequence numbers of the embodiments of the present disclosure are for description only and do not indicate the superiority or inferiority of the embodiments. The description of the various embodiments above tends to emphasize the differences between the embodiments. Similarities or identical aspects can be referred to each other. For brevity, details are not repeated herein.

It should also be noted that, in the present disclosure, the terms "include", "comprise", or any other variations thereof are intended to cover non-exclusive inclusion, such that a process, method, article, or device that includes a series of elements includes not only those elements, but also other elements not explicitly listed, or elements inherent to such process, method, article, or device. Without further limitation, an element defined by the phrase "comprising a..." does not preclude the existence of additional identical elements in the process, method, article, or device that includes the said element.

The sequence numbers of the embodiments of the present disclosure are for description only and do not indicate the superiority or inferiority of the embodiments.

The methods disclosed in the several method embodiments provided in the present disclosure can be combined in any way without conflict to obtain new method embodiments.

The features disclosed in the several product embodiments provided in the present disclosure can be combined in any way without conflict to obtain new product embodiments.

The features disclosed in the several method or device embodiments provided in the present disclosure can be combined in any way without conflict to obtain new method embodiments or device embodiments.

The above are only some embodiments of the present disclosure and are not intended to limit the protection scope of the present disclosure. Any modifications, equivalent replacements, improvements, etc., made within the spirit and principles of the present disclosure shall be included within the scope of the present disclosure.

## Claims

1. A data transmission method, **characterized in that** it is applied to a terminal device, the method comprising:
identifying (S101) a usage scenario of an application;
in a case where the usage scenario is a first scenario, popping up (S102) prompt information to a user via a display interface; wherein the prompt information is configured to prompt the user with subscribable value-added services;
in response to a confirmation operation input by the user for the prompt information, sending (S103) a subscription instruction to a first network element of a core network; wherein the subscription instruction is configured to subscribe to a value-added service among the subscribable value-added services;
receiving (S104) network slice resources associated with the value-added service allocated by the first network element of the core network; and
transmitting (S105) data of the application on the network slice resources.

2. The method according to claim 1, wherein the first scenario comprises one or more of the following:
detecting that a freeze rate of the data of the application is greater than a first threshold;
detecting that a signal-to-interference-plus-noise ratio of the data of the application is less than a second threshold;
detecting that a number of terminal devices in a network where the terminal device is located is greater than a third threshold;
detecting that a temperature of the terminal device is higher than a fourth threshold.

3. The method according to claim 1, wherein the popping (S102) up prompt information to a user via a display interface comprises:
popping up the subscribable value-added services to the user via the display interface;
popping up optional applications associated with the value-added service to the user via the display interface; and
popping up an optional effective duration for each application among the optional applications associated with the value-added service to the user via the display interface.

4. The method according to claim 3, wherein the method further comprises at least one of the following:
in response to a first selection instruction from the user for the optional applications associated with the value-added service, selecting a selected application among the optional applications; and
in response to a second selection instruction from the user for the optional effective duration of the selected application, selecting an effective duration;
wherein the subscription instruction comprises at least one of the first selection instruction and the second selection instruction.

5. The method according to claim 1, wherein the sending (S103) a subscription instruction to a first network element of a core network comprises:
sending (S201) a subscription request to a second network element of the core network, for the second network element to forward the subscription request to a server; wherein the subscription request is configured to obtain a subscription link for the value-added service;
receiving (S202) a response message from the server; wherein the response message comprises the subscription link for the value-added service;
popping (S203) up the subscription link to the user via the display interface; and
in response to a subscription operation input by the user for the subscription link, sending (S2041) the subscription instruction to the second network element of the core network, for the second network element to forward the subscription instruction to the server, and sending (S2042) the subscription instruction to the first network element of the core network via the server.

6. The method according to claim 5, wherein the sending (S2041) the subscription instruction to the second network element of the core network, for the second network element to forward the subscription instruction to the server, comprises:
in response to the subscription operation input by the user for the subscription link, popping up at least one of the following to the user via the display interface: optional applications associated with the value-added service, and an optional effective duration for each application among the optional applications;
performing at least one of the following two: in response to a first selection instruction from the user for the optional applications associated with the value-added service, selecting a selected application among the optional applications, and in response to a second selection instruction from the user for the optional effective duration of the selected application, selecting an effective duration; and
sending the subscription instruction to the second network element of the core network, for the second network element to forward the subscription instruction to the server; wherein the subscription instruction comprises at least one of the first selection instruction and the second selection instruction.

7. The method according to any one of claims 1-6, wherein the subscription instruction comprises one or more of the following:
identification information of a selected application selected via a first selection instruction; and
an effective duration selected via a second selection instruction.

8. The method according to any one of claims 1-6, wherein at least one of the subscription request and the subscription instruction comprises one or more of the following:
International Mobile Equipment Identity (IMEI) of the terminal device;
Public Land Mobile Network (PLMN) associated with the terminal device; and
International Mobile Subscriber Identification Number (IMSI) of the terminal device.

9. The method according to claim 5 or 6, wherein after the sending (S2041) the subscription instruction to the second network element of the core network, for the second network element to forward the subscription instruction to the server, the method further comprises:
sending a query request to the second network element of the core network, for the second network element to forward the query request to the server; wherein the query request is configured to query whether the value-added service has taken effect; and
receiving a first subscription result from the server; wherein the first subscription result is configured to indicate that the value-added service has taken effect.

10. The method according to claim 9, wherein the first subscription result comprises one or more of the following:
identification information of network slice resources for which the first network element has been triggered to send;
identification information of a selected application corresponding to a first selection instruction; and
an effective duration corresponding to a second selection instruction.

11. The method according to any one of claims 1-6, wherein before the transmitting (S105) data of the application on the network slice resources, the method further comprises:
sending a PDU session establishment request to a third network element of the core network; wherein the PDU session establishment request comprises identification information of the network slice resources; and
receiving a PDU session establishment confirmation message from the third network element of the core network; wherein the PDU session establishment confirmation message is configured to bind the data of the application to the network slice resources.

12. The method according to any one of claims 1-6, wherein
in a case where the usage scenario is the first scenario, displaying a network parameter control to the user on the display interface with first display parameters; and
in a case where the data of the application is transmitted on the network slice resources, displaying the network parameter control to the user on the display interface with second display parameters; wherein network parameters **characterized by** the second display parameters are superior to network parameters **characterized by** the first display parameters.

13. The method according to claim 12, wherein at least one of the first display parameters and the second display parameters comprise one or more of the following:
display color, shape, text format, and font size.

14. A data transmission apparatus (60), **characterized in that** it is applied to a terminal device, the apparatus comprising:
an AI module (601), configured to identify a usage scenario of an application;
a display unit (602), configured to, in a case where the usage scenario is a first scenario, pop up prompt information to a user via a display interface; wherein the prompt information is configured to prompt the user with subscribable value-added services; and
a first communication unit (603), configured to, in response to a confirmation operation input by the user for the prompt information, send a subscription instruction to a first network element of a core network; wherein the subscription instruction is configured to subscribe to a value-added service among the subscribable value-added services;
wherein the first communication unit (603) is further configured to receive network slice resources associated with the value-added service allocated by the first network element of the core network;
the first communication unit is further configured to transmit data of the application on the network slice resources.

15. A computer device (800), comprising:
a memory (820), configured to store a computer program;
a processor (810), connected to the memory (820), configured to call and run the computer program from the memory (820), to implement the method according to any one of claims 1 to 13; and
a transceiver (830), configured to receive and send information during a process of exchanging information with other devices.
